(19) **Europäisches Patentamt / European Patent Office / Office européen des brevets**

(11) **EP 3 384 459 B1**

(12) **FASCICULE DE BREVET EUROPEEN**

(45) Date de publication et mention de la délivrance du brevet:
**27.05.2020 Bulletin 2020/22**

(21) Numéro de dépôt: **16802077.4**

(22) Date de dépôt: **29.11.2016**

(51) Int Cl.:
*H04N 9/04* *(2006.01)*     *G06T 3/40* *(2006.01)*

(86) Numéro de dépôt international:
**PCT/EP2016/079139**

(87) Numéro de publication internationale:
**WO 2017/093253 (08.06.2017 Gazette 2017/23)**

(54) **PROCEDE DE TRAITEMENT DE SIGNAUX ISSUS D'UNE MATRICE DE PRISE D'IMAGES EN COULEUR, ET CAPTEUR CORRESPONDANT**

VERFAHREN ZUR VERARBEITUNG VON SIGNALEN AUS EINER MATRIX ZUR ENTNAHME VON FARBBILDERN UND ENTSPRECHENDER SENSOR

METHOD FOR PROCESSING SIGNALS FROM A MATRIX FOR TAKING COLOUR IMAGES, AND CORRESPONDING SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2015 FR 1561646**

(43) Date de publication de la demande:
**10.10.2018 Bulletin 2018/41**

(73) Titulaire: **Teledyne e2v Semiconductors SAS 38120 Saint-Egrève (FR)**

(72) Inventeur: **DIASPARRA, Bruno 38180 Seyssins (FR)**

(74) Mandataire: **Lucas, Laurent Jacques et al Marks & Clerk France Conseils en Propriété Industrielle Immeuble Visium 22, Avenue Aristide Briand 94117 Arcueil Cedex (FR)**

(56) Documents cités:
WO-A1-2015/083502     US-A1- 2003 025 814
US-A1- 2004 028 271     US-B2- 8 873 847

**Description**

DOMAINE TECHNIQUE

L'invention concerne les capteurs d'image en couleurs composés d'une mosaïque de pixels photosensibles dits pixels colorés recueillant chacun un signal représentant une composante de lumière reçue par ce pixel dans la couleur associée au pixel.

ETAT DE L'ART

Le plus souvent la mosaïque de pixels comporte des pixels de trois couleurs complémentaires rouge, vert et bleu, mais elle pourrait être composée des couleurs magenta, cyan et jaune. On décrira l'invention en faisant l'hypothèse que les couleurs sont rouge (R), vert (G) et bleu (B). La mosaïque est souvent une mosaïque de Bayer comportant deux fois plus de pixels verts que de pixels bleus ou rouges. Les pixels sont en pratique revêtus de filtres de la couleur considérée pour ne recueillir que la lumière dans la composante de cette couleur. Dans certains arrangements, des pixels blancs (non recouverts de filtres) et/ou des pixels "noirs" (ne laissant passer que la lumière infrarouge) peuvent être répartis dans la matrice, en plus des pixels colorés.

Les pixels rouges ne fournissent pas de signal représentant les composantes de lumière verte et bleue, reçue par ces pixels ; mais on se sert des pixels voisins, verts et bleus, pour fournir une approximation de la composante verte et bleue qui est reçue par le pixel rouge. Il en est de même pour les pixels bleus ou verts dont on peut estimer, grâce aux pixels voisins, les composantes de lumière qu'ils ne détectent pas.

Il est donc habituel de reconstituer à partir des signaux fournis par tous les pixels du capteur une image complète dans laquelle chaque point d'image associé à un pixel est représenté par trois niveaux de lumière, respectivement rouge, verte et bleue même si le pixel ne détecte qu'une couleur.

Cette reconstitution est faite par une fonction d'interpolation qui peut être simple ou complexe : l'interpolation linéaire et l'interpolation bilinéaire sont les fonctions les plus simples. Dans l'interpolation linéaire la plus simple, on affecte à un premier pixel détectant une première couleur, une valeur numérique pour une deuxième couleur, en prenant la moyenne des signaux fournis par deux pixels de la deuxième couleur qui sont les plus proches du premier, verticalement ou horizontalement. Dans l'interpolation bilinéaire la plus simple, on utilise un bloc de 9 pixels centré sur le premier pixel, et on attribue un coefficient de pondération à chaque pixel du bloc, en fonction de son éloignement du pixel central. Une interpolation à partir d'un bloc de 5x5 pixels est également possible. L'interpolation est alors une fonction de filtrage représentée par une matrice de 3x3 ou 5x5 coefficients.

Enfin des interpolations plus sophistiquées telles qu'une interpolation cubique sont possibles, mais elles demandent des puissances de calcul importantes et des mémoires de calcul importantes.

La plupart des interpolations simples sont des fonctions de filtrage passe-bas, qui ont le défaut de produire des effets de moiré. Ces effets de moiré résultent du fait que la répartition des pixels d'une couleur déterminée est faite avec un pas plus réduit que le pas des pixels du capteur. Typiquement, si le pas des pixels en ligne et en colonne est P, le pas des pixels vert (en général deux fois plus nombreux que les pixels rouge et les pixels bleus) sera 2P en ligne et en colonne et le pas des pixels rouges ou des pixels bleus sera 3P. L'échantillonnage spatial des points de l'image est donc un sous-échantillonnage pour chaque couleur, alors que l'image finale reconstituée est une image avec des points au pas P. Ce sous-échantillonnage produit un repliement de spectre lors du traitement d'interpolation et cela génère des artefacts (fausses couleurs) aux endroits où l'image contient des variations spatiales rapides d'intensité ou de couleur.

Le brevet US2003/0025814 propose une fonction d'interpolation basée sur une interpolation bilinéaire et un filtrage passe-bas, pour calculer les trois composantes couleurs basse fréquence correspondant à chaque pixel, et d'ajouter à chacune une composante haute-fréquence qui ne dépend que de la couleur du pixel concerné, obtenue par soustraction entre la valeur du signal coloré fourni par le pixel et la valeur interpolée de la composante couleur correspondante.

RESUME DE L'INVENTION

L'invention part de la constatation que dans une image ordinaire, c'est en général la luminance et non la chrominance qui varie spatialement le plus dans l'image. Autrement dit, les variations de quantités de lumière d'un point d'image à un point voisin sont en général plus importantes que les variations de couleur d'un point d'image à un point voisin.

Si c'est bien le cas, on peut considérer que les détails à haute fréquence spatiale ont peu de variations de couleur alors qu'ils ont de fortes variations de luminance. Le spectre de fréquences spatiales de la luminance de l'image sera le plus souvent un spectre à peu de composantes basse fréquence, alors que le spectre de fréquences spatiales de la chrominance sera le plus souvent un spectre à peu de composantes haute fréquence.

On propose selon l'invention d'établir une fonction d'interpolation qui tient compte de cette particularité. Pour cela, on produit deux filtres d'interpolation différents, l'un adapté à l'interpolation de chacune des composantes de couleur, l'autre adapté à l'interpolation des pixels indépendamment de leur couleur, et on ajoute, pour chaque couleur, le résultat de l'interpolation du deuxième filtre au résultat de l'interpolation par le premier filtre, cela pour chaque couleur. Le filtre adapté à l'interpolation des composantes de couleur est un filtre ayant une fonction plutôt passe-bas. Le filtre adapté à l'interpolation des pixels indépendamment de leur couleur est un filtre ayant une fonction plutôt passe-haut.

Plus précisément, l'invention propose un procédé de traitement de l'image fournie par un capteur d'image en couleur comprenant une mosaïque de N pixels colorés arrangés selon une répartition géographique régulière de trois couleurs dans laquelle chaque pixel est associé à un point de l'image à établir, chaque pixel fournissant un signal numérique dont la valeur représente la composante de luminance d'un point d'image dans la couleur correspondant à ce pixel, les signaux issus des N pixels étant arrangés en une matrice de signaux et le traitement d'image comprenant un calcul d'interpolation de signaux de la matrice, permettant de donner à chaque point d'image trois valeurs numériques de composantes de luminance correspondant respectivement aux trois couleurs alors que le pixel correspondant à ce point d'image fournit un signal correspondant à une seule couleur, procédé caractérisé en ce qu'il comporte les étapes suivantes :

-  définition d'un premier filtre matriciel élémentaire qui est un filtre d'interpolation bilinéaire, de dimension mxm, m étant un nombre impair supérieur ou égal à 3,
-  définition d'un filtre matriciel passe-bas de dimension nxn, n étant un nombre impair supérieur ou égal à 3,
-  définition d'un filtre matriciel passe-haut complémentaire du filtre passe-bas, de dimension nxn,
-  convolution du premier filtre matriciel avec le filtre passe-bas, aboutissant à un filtre d'interpolation basse-fréquence de dimension (m+n-1)x(m+n-1),
-  convolution du premier filtre matriciel avec le filtre passe-haut, aboutissant à un filtre d'interpolation haute-fréquence de dimension (m+n-1)x(m+n-1),
-  filtrage de la matrice de signaux numériques, à partir des pixels de la première couleur seulement, par le filtre d'interpolation basse-fréquence, filtrage de la matrice de signaux à partir des pixels de la deuxième couleur seulement, avec le filtre d'interpolation basse-fréquence, et filtrage de la matrice de signaux, à partir des pixels de la troisième couleur seulement, avec le filtre d'interpolation basse-fréquence, ces trois filtrages aboutissant à donner une première valeur numérique intermédiaire à chaque point de l'image pour chacune des couleurs,
-  filtrage de la matrice complète de signaux avec le filtre d'interpolation haute fréquence, pour établir une deuxième valeur numérique intermédiaire pour chaque point de l'image,
-  addition pour chaque pixel, pour obtenir une valeur numérique d'une couleur donnée de ce pixel, de la première valeur numérique intermédiaire correspondant à ce pixel et à cette couleur, et de la deuxième valeur numérique correspondant à ce pixel.

Le premier filtre matriciel élémentaire est de préférence un filtre représenté par la matrice suivante :

$$\begin{bmatrix} 1/4 & 1/2 & 1/4 \\ 1/2 & 1 & 1/2 \\ 1/4 & 1/2 & 1/4 \end{bmatrix}$$

Le filtre matriciel passe-bas est de préférence un simple filtre de moyenne, de dimension 3x3 et est représenté par la matrice suivante :

$$\begin{bmatrix} 1/9 & 1/9 & 1/9 \\ 1/9 & 1/9 & 1/9 \\ 1/9 & 1/9 & 1/9 \end{bmatrix}$$

et le filtre passe-haut est de préférence représenté par la matrice suivante :

$$\begin{bmatrix} -1/9 & -1/9 & -1/9 \\ -1/9 & 8/9 & -1/9 \\ -1/9 & -1/9 & -1/9 \end{bmatrix}$$

Dans le cas où les pixels d'une couleur déterminée ont un pas de répartition géographique deux fois plus petit que le pas des pixels des autres couleurs, le filtrage de la matrice de pixels à partir des pixels de cette couleur déterminée par le filtre d'interpolation basse-fréquence comprend une division par deux pour fournir la première valeur intermédiaire pour cette couleur. Ce sera le cas pour des filtres organisés en mosaïque de Bayer qui ont deux fois plus de pixels verts que de pixels rouges et de pixels bleus.

Dans la mise en œuvre préférée du procédé selon l'invention,

- on définit un filtre d'interpolation basse-fréquence de dimension 5x5, représenté par la matrice suivante :

$$\begin{bmatrix} 1/36 & 3/36 & 4/36 & 3/36 & 1/36 \\ 3/36 & 9/36 & 12/36 & 9/36 & 3/36 \\ 4/36 & 12/36 & 16/36 & 12/36 & 4/36 \\ 3/36 & 9/36 & 12/36 & 9/36 & 3/36 \\ 1/36 & 3/36 & 4/36 & 3/36 & 1/36 \end{bmatrix}$$

- on définit un filtre d'interpolation haute-fréquence de dimension 5x5 représenté par la matrice suivante :

$$\begin{bmatrix} -1/36 & -3/36 & -4/36 & -3/36 & -1/36 \\ -3/36 & 0 & 6/36 & 0 & -3/36 \\ -4/36 & 6/36 & 20/36 & 6/36 & -4/36 \\ -3/36 & 0 & 6/36 & 0 & -3/36 \\ -1/36 & -3/36 & -4/36 & -3/36 & -1/36 \end{bmatrix}$$

- on filtre la matrice de signaux numériques, à partir des pixels de la première couleur seulement, par le filtre d'interpolation basse-fréquence, on filtre la matrice de signaux, à partir des pixels de la deuxième couleur seulement, avec le filtre d'interpolation basse-fréquence, et on filtre la matrice de signaux, à partir des pixels de la troisième couleur, avec le filtre d'interpolation basse-fréquence, ces trois filtrages aboutissant à donner une première valeur numérique intermédiaire à chaque point de l'image pour chacune des couleurs,
- puis on filtre la matrice complète de signaux numériques avec le filtre d'interpolation haute fréquence, pour établir une deuxième valeur numérique intermédiaire pour chaque point de l'image,
- et pour chaque pixel, on additionne, pour obtenir une valeur numérique d'une couleur donnée de ce pixel, la première valeur numérique intermédiaire correspondant à ce pixel et à cette couleur, et la deuxième valeur numérique correspondant à ce pixel.

L'invention concerne également un capteur d'image comportant les moyens de traitement numérique permettant la mise en œuvre du procédé. L'expression "capteur d'image" peut désigner :

- soit un composant comportant une matrice de pixels avec un traitement d'image selon l'invention intégré dans ce composant,
- soit un ensemble de composants parmi lesquels un composant comportant une matrice de pixels et certains traitements d'image, et un composant supplémentaire effectuant le traitement selon l'invention,
- soit un composant ou un ensemble de composants et un processeur (PC, ordinateur) recevant du composant ou de l'ensemble de composants des signaux représentant l'image et effectuant le traitement selon l'invention.

D'autres caractéristiques et avantages de l'invention apparaîtront à la lecture de la description détaillée qui suit et qui est faite en référence aux dessins annexés dans lesquels :

- la figure 1 représente une matrice de pixels colorés typique, dite matrice de Bayer ;
- la figure 2 représente l'étape de filtrage d'interpolation basse-fréquence ;
- la figure 3 représente l'étape de filtrage d'interpolation haute-fréquence et l'étape d'addition des résultats des deux filtrages d'interpolation.

DESCRIPTION DETAILLEE

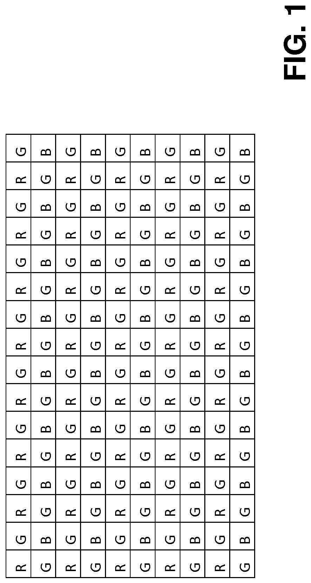

Sur la figure 1 on a représenté une mosaïque de pixels d'un capteur d'image en couleur comportant des pixels de couleur arrangés selon le principe d'une mosaïque de Bayer. La couleur pour un pixel donné est représentée par une lettre sur ce pixel. La lettre R désigne un pixel de couleur rouge, la lettre G un pixel vert, et la lettre B un pixel bleu. Un pixel d'une couleur donnée recueille un signal représentant la composante de cette couleur dans la lumière reçue par le pixel. Il y a deux pixels verts, un pixel rouge et un pixel bleu dans un motif élémentaire répété dans la mosaïque.

Dans l'art antérieur, on prendrait typiquement un filtre d'interpolation pour attribuer à n'importe quel pixel d'une couleur quelconque trois valeurs numériques correspondant aux trois couleurs. Le filtre est représenté par une matrice de coefficients de pondération. Typiquement, un filtre bilinéaire 3x3 à 9 coefficients est représenté par la matrice suivante :

$$\begin{bmatrix} 1/4 & 1/2 & 1/4 \\ 1/2 & 1 & 1/2 \\ 1/4 & 1/2 & 1/4 \end{bmatrix}$$

La position d'un coefficient dans le filtre représente la position d'un pixel dans un bloc de 3x3 pixels. Le coefficient associé à une position de pixel est d'autant plus faible que la position du pixel est plus éloignée du pixel central.

On prend un pixel quelconque. On lui attribue la position centrale dans un bloc de 3x3 pixels, c'est-à-dire qu'on constitue le bloc autour de ce pixel choisi. Les 9 pixels de ce bloc fournissent tous des signaux chacun dans sa propre couleur.

On attribue alors comme valeur verte Vg au pixel central la somme des valeurs de signaux fournis par les pixels verts du bloc, affectées chacune du coefficient de pondération qui, dans le filtre matriciel, correspond à la position du pixel vert dans le bloc.

De même, on attribue comme valeur bleue Vb au pixel central la somme des valeurs de signaux fournis par les pixels bleus du bloc, affectées chacune du coefficient de pondération qui, dans le filtre matriciel, correspond à la position du pixel bleu dans le bloc.

Et enfin, on attribue comme valeur rouge Vr au pixel central la somme des valeurs des pixels rouges du bloc, affectées chacune du coefficient correspondant, dans le filtre matriciel, à la position du pixel rouge dans le bloc.

On a ainsi donné à n'importe quel pixel de la mosaïque, quelle que soit la couleur à laquelle il est sensible, trois niveaux de lumière reçue, correspondant aux trois couleurs.

Dans le procédé selon l'invention, on effectue également des interpolations à partir de blocs de pixels centrés sur un pixel quelconque et d'une matrice de coefficients représentant les coefficients de pondération qu'il faut affecter à chaque pixel du bloc. Mais la particularité de l'invention est dans la manière dont on choisit le filtre d'interpolation, ici deux filtres d'interpolation, et dans la manière dont on combine les résultats des deux filtrages effectués.

Le premier filtre d'interpolation, représenté par une première matrice de coefficients, est obtenu par la convolution d'un filtre bilinéaire de dimension mxm (par exemple, m=3) et d'un filtre passe-bas de dimension nxn (par exemple n=3). Le filtre passe-bas est de préférence un simple filtre de valeur moyenne représenté par une matrice de coefficients tous égaux à 1/9. Le coefficient 1/9 vient de ce qu'il y a neuf pixels et qu'il faut diviser la somme des signaux par neuf si on veut la ramener à une valeur normalisée correspondant à un pixel.

$$\begin{bmatrix} 1/9 & 1/9 & 1/9 \\ 1/9 & 1/9 & 1/9 \\ 1/9 & 1/9 & 1/9 \end{bmatrix}$$

Le deuxième filtre d'interpolation, représenté par une deuxième matrice de coefficients, est obtenu par la convolution du même filtre bilinéaire de dimension mxm et d'un filtre passe-haut, complémentaire du filtre passe-bas et de même dimension nxn. Les filtres passe-bas et passe-haut sont complémentaires en ce sens qu'ils ont la même fréquence de coupure. Le filtre passe-haut est représenté par la matrice de coefficients :

$$[ \quad -1/9 \quad -1/9 \quad -1/9 \quad ]$$
$$[ \quad -1/9 \quad 8/9 \quad -1/9 \quad ]$$
$$[ \quad -1/9 \quad -1/9 \quad -1/9 \quad ]$$

Le filtre bilinéaire est de préférence le filtre bilinéaire le plus simple possible qui est représenté par la matrice :

$$[ \quad 1/4 \quad 1/2 \quad 1/4 \quad ]$$
$$[ \quad 1/2 \quad 1 \quad 1/2 \quad ]$$
$$[ \quad 1/4 \quad 1/2 \quad 1/4 \quad ]$$

On rappelle pour mémoire le principe de la convolution de deux matrices.

La convolution d'une matrice mxm par une matrice noyau nxn (avec n impair) fournit une matrice de (m+n-1)x(m+n-1). On l'établit de la manière suivante : on élargit la matrice mxm en complétant les mxm valeurs par n-1 lignes de zéros au-dessus, n-1 lignes de zéros au-dessous, n-1 colonnes de zéros à gauche, et n-1 colonnes de zéros à droite ; ensuite, pour chacun des points d'une matrice-résultat de (m+n-1)x(m+n-1) points, on constitue dans la matrice élargie un bloc de nxn points centré sur un point correspondant de la matrice élargie, et on fait la somme des valeurs des nxn points de ce bloc pondérés par les coefficients correspondants de la matrice noyau nxn ; cette somme constitue la valeur du point considéré de la matrice de (m+n-1)x(m+n-1) valeurs.

Exemple :

Matrice mxm (3x3) :    Matrice noyau nxn (3x3) :
**A B C**              **j k p**
**D E F**              **q r s**
**G H J**              **t u v**

Matrice mxm élargie par des lignes et colonnes de zéros :

0   0   0   0   0   0   0

0   0   0   0   0   0   0
0   0   **A**   **B**   **C**   0   0
0   0   **D**   **E**   **F**   0   0
0   0   **G**   **H**   **J**   0   0
0   0   0   0   0   0   0
0   0   0   0   0   0   0

Résultat de la convolution : matrice 5x5

$$\begin{matrix} A' & B' & C' & D' & E' \\ F' & G' & H' & I' & J' \\ K' & L' & M' & N' & P' \\ Q' & R' & S' & T' & U' \\ V' & W' & X' & Y' & Z' \end{matrix}$$

Avec :

A'= somme des coefficients du premier bloc mxm de gauche de la matrice élargie (encadré en trait plein) pondérés par les coefficients de la matrice noyau mxm ; A' = A x v
B'= somme des coefficients du bloc suivant à droite du premier (encadré en trait pointillé) pondérés par les coefficients de la matrice noyau ;

$$B' = A \times u + B \times v$$

$$C' = A \times t + B \times u + C \times v$$

etc. jusqu'à Z' = k*J, en passant par

$$M' = A \times j + B \times k + C \times p + D \times q + E \times r + F \times s + G \times t + H \times u + J \times v$$

Il s'agit là d'une opération de convolution classique.
Selon l'invention, on fait donc la convolution d'un filtre bilinéaire et d'un filtre passe-bas, aboutissant à un filtre d'interpolation dit filtre d'interpolation basse-fréquence.
De même, on fait la convolution d'un filtre bilinéaire et d'un filtre passe-haut complémentaire du filtre passe-bas, aboutissant à un filtre d'interpolation dit filtre d'interpolation haute fréquence.
Le résultat des convolutions est alors le suivant :

a) Filtre d'interpolation basse-fréquence :

$$\begin{bmatrix} 1/36 & 3/36 & 4/36 & 3/36 & 1/36 \\ 3/36 & 9/36 & 12/36 & 9/36 & 3/36 \\ 4/36 & 12/36 & 16/36 & 12/36 & 4/36 \\ 3/36 & 9/36 & 12/36 & 9/36 & 3/36 \\ 1/36 & 3/36 & 4/36 & 3/36 & 1/36 \end{bmatrix}$$

b) Filtre d'interpolation haute-fréquence :

$$\begin{bmatrix} -1/36 & -3/36 & -4/36 & -3/36 & -1/36 \\ -3/36 & 0 & 6/36 & 0 & -3/36 \\ -4/36 & 6/36 & 20/36 & 6/36 & -4/36 \\ -3/36 & 0 & 6/36 & 0 & -3/36 \\ -1/36 & -3/36 & -4/36 & -3/36 & -1/36 \end{bmatrix}$$

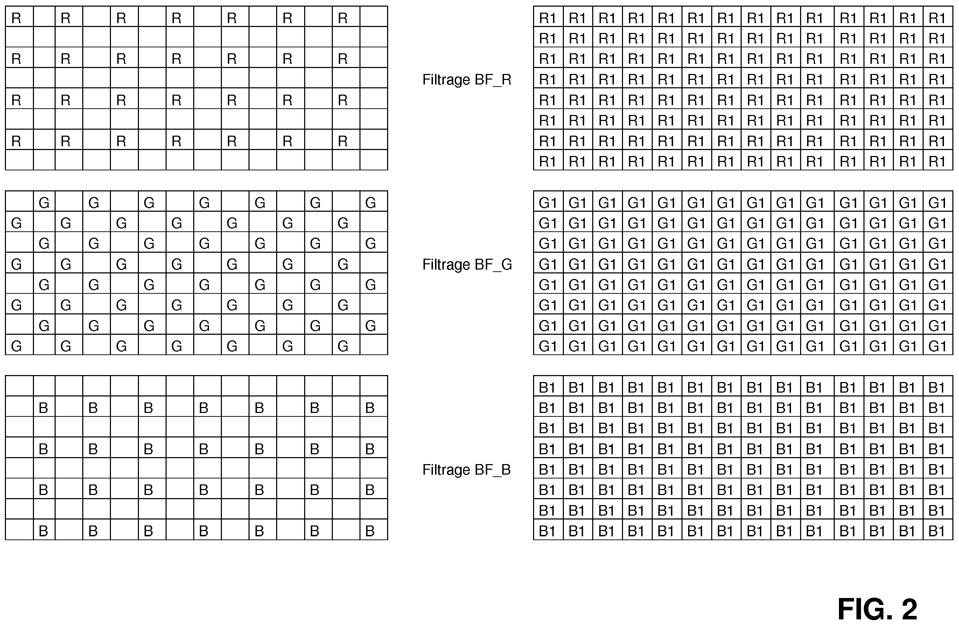

Ce sont des filtres 5x5 si on est parti d'un filtre bilinéaire 3x3 et d'un filtre passe-bas 3x3. On effectue l'interpolation de tous les pixels de la mosaïque par le filtre d'interpolation basse-fréquence (figure 2), pour chacune des couleurs respectivement, pour donner à chacun des pixels, quelle que soit la couleur à laquelle il est sensible, une première valeur numérique rouge R1, une première valeur numérique verte G1, et une première valeur numérique bleue B1. Ces valeurs numériques résultent des signaux (R pour le rouge, G pour le vert, B pour le bleu) détectés par les 25 pixels du bloc et des coefficients correspondants de la matrice. L'interpolation est donc faite couleur par couleur. En pratique, et c'est un avantage de l'invention, cette interpolation par le filtre d'interpolation basse-fréquence est calculée en une seule passe, puisqu'en chaque position du filtre, on connait la couleur que l'on traite, qui est la couleur du pixel sur lequel est centré le filtre.

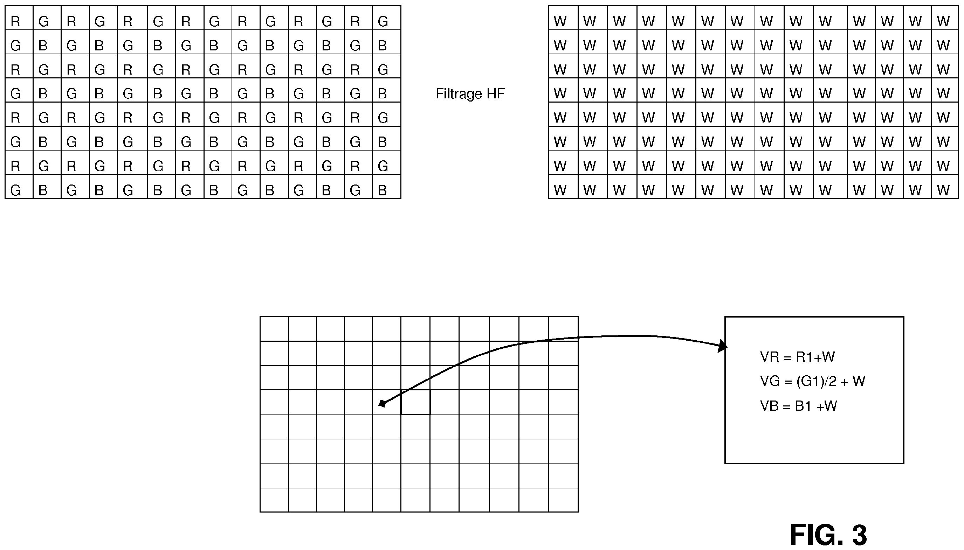

On effectue par ailleurs (figure 3) l'interpolation de tous les pixels de la mosaïque par le filtre d'interpolation haute-fréquence, sans tenir compte de la couleur, pour donner à chacun des pixels, quelle que soit la couleur à laquelle ils sont sensibles, une deuxième valeur numérique W. Cette deuxième valeur numérique, affectée à un pixel quelconque, résulte de la somme pondérée des signaux détectés par les 25 pixels du bloc 5x5 constitué autour du pixel considéré. La pondération est celle de la matrice ci-dessus représentant le filtre d'interpolation haute-fréquence, où le coefficient de pondération utilisé pour un pixel du bloc est celui qui, dans la matrice, correspond à la position de ce pixel dans le bloc. Puis, pour donner une valeur numérique rouge finale à un pixel quelconque, on ajoute la deuxième valeur numérique de ce pixel à la première valeur numérique rouge de ce pixel. De même, on ajoute la deuxième valeur numérique du pixel à la première valeur numérique verte de ce pixel pour obtenir une valeur verte finale. Et de même encore, on ajoute la deuxième valeur numérique du pixel à la première valeur numérique bleue de ce pixel pour obtenir une valeur bleue finale.

On notera que s'il y a plus de pixels verts que de pixels rouges ou bleus, comme c'est le cas général des matrices de Bayer, on prévoira que le filtrage basse-fréquence pour la couleur verte est affecté d'un coefficient 1/2 pour qu'il pèse le même poids que les autres couleurs.

Les valeurs numériques finales VR, VG, VB attribuées à un pixel pour les trois couleurs sont donc alors respectivement :

$$VR = R1 + W$$

$$VG = (G1)/2 + W$$

$$VB = B1 + W$$

## Revendications

1.   Procédé de traitement de l'image fournie par un capteur d'image en couleur comprenant une mosaïque de N pixels colorés arrangés selon une répartition géographique régulière de trois couleurs dans laquelle chaque pixel est associé à un point de l'image à établir, chaque pixel fournissant un signal numérique dont la valeur représente la composante de luminance d'un point d'image dans la couleur correspondant à ce pixel, les signaux issus des N pixels étant arrangés en une matrice et le traitement d'image comprenant un calcul d'interpolation de signaux de la matrice, permettant de donner à chaque point d'image trois valeurs numériques de composantes de luminance correspondant respectivement aux trois couleurs alors que le pixel correspondant à ce point d'image fournit un signal correspondant à une seule couleur, procédé **caractérisé en ce qu'**il comporte les étapes suivantes :

- définition d'un premier filtre matriciel élémentaire qui est un filtre d'interpolation bilinéaire, de dimension mxm, m étant un nombre impair supérieur ou égal à 3,
- définition d'un filtre matriciel passe-bas de dimension nxn, n étant un nombre impair supérieur ou égal à 3,
- définition d'un filtre matriciel passe-haut complémentaire du filtre passe-bas, de dimension nxn,
- convolution du premier filtre matriciel avec le filtre passe-bas, aboutissant à un filtre d'interpolation basse-fréquence de dimension (m+n-1)x(m+n-1),
- convolution du premier filtre matriciel avec le filtre passe-haut, aboutissant à un filtre d'interpolation haute-fréquence de dimension (m+n-1)x(m+n-1),
- filtrage de la matrice de signaux numériques, à partir des pixels de la première couleur seulement, par le filtre d'interpolation basse-fréquence, filtrage de la matrice de signaux numériques, à partir des pixels de la deuxième couleur seulement, avec le filtre d'interpolation basse-fréquence, et filtrage de la matrice de signaux numériques, à partir des pixels de la troisième couleur seulement, avec le filtre d'interpolation basse-fréquence, ces trois filtrages aboutissant à donner une première valeur numérique intermédiaire à chaque point de l'image pour chacune des couleurs,
- filtrage de la matrice complète de signaux numériques avec le filtre d'interpolation haute fréquence, sans tenir compte des couleurs, pour établir une deuxième valeur numérique intermédiaire pour chaque point de l'image,
- addition pour chaque pixel, pour obtenir une valeur numérique d'une couleur donnée de ce pixel, de la première valeur numérique intermédiaire correspondant à ce pixel et à cette couleur, et de la deuxième valeur numérique correspondant à ce pixel.

**2.** Procédé selon la revendication 1, **caractérisé en ce que** le premier filtre matriciel élémentaire est de dimension 3x3 et est représenté par la matrice suivante :

$$\begin{bmatrix} 1/4 & 1/2 & 1/4 \\ 1/2 & 1 & 1/2 \\ 1/4 & 1/2 & 1/4 \end{bmatrix}$$

**3.** Procédé selon l'une des revendications 1 et 2, **caractérisé en ce que** le filtre matriciel passe-bas est un simple filtre de moyenne, de dimension 3x3 et est représenté par la matrice suivante :

$$\begin{bmatrix} 1/9 & 1/9 & 1/9 \\ 1/9 & 1/9 & 1/9 \\ 1/9 & 1/9 & 1/9 \end{bmatrix}$$

et le filtre passe-haut est représenté par la matrice suivante :

$$\begin{bmatrix} -1/9 & -1/9 & -1/9 \\ -1/9 & 8/9 & -1/9 \\ -1/9 & -1/9 & -1/9 \end{bmatrix}$$

**4.** Procédé selon l'une des revendications 1 à 3, **caractérisé en ce que** dans le cas où les pixels d'une couleur déterminée ont un pas de répartition géographique deux fois plus petit que le pas des pixels des autres couleurs, le filtrage de la matrice de signaux numériques à partir des pixels de cette couleur déterminée par le filtre d'interpolation basse-fréquence est suivi d'une division par deux pour fournir la première valeur intermédiaire pour cette couleur.

**5.** Procédé de traitement de l'image fournie par un capteur d'image en couleur comprenant une mosaïque de N pixels colorés arrangés selon une répartition géographique régulière de trois couleurs dans laquelle chaque pixel est associé à un point de l'image à établir, chaque pixel fournissant un signal numérique dont la valeur représente la composante de luminance d'un point d'image dans la couleur correspondant à ce pixel, les signaux numériques issus des N pixels étant arrangés en une matrice et le traitement d'image comprenant un calcul d'interpolation de signaux de la matrice, permettant de donner à chaque point d'image trois valeurs numériques de composantes de luminance correspondant respectivement aux trois couleurs alors que le pixel correspondant à ce point d'image fournit un signal correspondant à une seule couleur, procédé **caractérisé en ce qu'**il comporte les étapes suivantes :

- définition d'un filtre d'interpolation basse-fréquence de dimension 5x5, représenté par la matrice suivante :

$$\begin{bmatrix} 1/36 & 3/36 & 4/36 & 3/36 & 1/36 \\ 3/36 & 9/36 & 12/36 & 9/36 & 3/36 \\ 4/36 & 12/36 & 16/36 & 12/36 & 4/36 \\ 3/36 & 9/36 & 12/36 & 9/36 & 3/36 \\ 1/36 & 3/36 & 4/36 & 3/36 & 1/36 \end{bmatrix}$$

- définition d'un filtre d'interpolation haute-fréquence de dimension 5x5 représenté par la matrice suivante :

$$\begin{bmatrix} -1/36 & -3/36 & -4/36 & -3/36 & -1/36 \\ -3/36 & 0 & 6/36 & 0 & -3/36 \\ -4/36 & 6/36 & 20/36 & 6/36 & -4/36 \\ -3/36 & 0 & 6/36 & 0 & -3/36 \\ -1/36 & -3/36 & -4/36 & -3/36 & -1/36 \end{bmatrix}$$

- filtrage de la matrice de signaux, à partir des pixels de la première couleur seulement, par le filtre d'interpolation basse-fréquence, filtrage de la matrice de signaux, à partir des pixels de la deuxième couleur seulement, avec le filtre d'interpolation basse-fréquence, et filtrage de la matrice de signaux, à partir des pixels de la troisième couleur seulement, avec le filtre d'interpolation basse-fréquence, ces trois filtrages aboutissant à donner une première valeur numérique intermédiaire à chaque point de l'image pour chacune des couleurs,
- filtrage de la matrice complète de signaux avec le filtre d'interpolation haute fréquence, sans tenir compte des couleurs, pour établir une deuxième valeur numérique intermédiaire pour chaque point de l'image,
- pour chaque pixel, addition, pour obtenir une valeur numérique d'une couleur donnée de ce pixel, de la première valeur numérique intermédiaire correspondant à ce pixel et à cette couleur, et de la deuxième valeur numérique correspondant à ce pixel.

6. Capteur d'image en couleur comprenant une mosaïque de N pixels colorés arrangés selon une répartition géographique régulière de trois couleurs dans laquelle chaque pixel est associé à un point de l'image à établir, chaque pixel fournissant un signal numérique dont la valeur représente la composante de luminance d'un point d'image dans la couleur correspondant à ce pixel, les signaux numériques issus des N pixels étant arrangés en une matrice et le traitement d'image comprenant un calcul d'interpolation de signaux de la matrice, permettant de donner à chaque point d'image trois valeurs numériques de composantes de luminance correspondant respectivement aux trois couleurs alors que le pixel correspondant à ce point d'image fournit un signal correspondant à une seule couleur, le capteur étant **caractérisé en ce qu'**il comporte :

- des moyens de filtrage de la matrice de signaux, à partir des pixels de la première couleur seulement, par un filtre d'interpolation basse-fréquence, filtrage de la matrice de signaux, à partir des pixels de la deuxième couleur seulement, avec le filtre d'interpolation basse-fréquence, et filtrage de la matrice de signaux, à partir des pixels de la troisième couleur seulement, avec le filtre d'interpolation basse-fréquence, ces trois filtrages aboutissant à donner une première valeur numérique intermédiaire à chaque point de l'image pour chacune des couleurs,
- des moyens de filtrage de la matrice complète de signaux avec un filtre d'interpolation haute fréquence, sans tenir compte des couleurs, pour établir une deuxième valeur numérique intermédiaire pour chaque point de l'image,
- des moyens d'addition, pour obtenir pour chaque pixel une valeur numérique d'une couleur donnée de ce pixel qui est la somme de la première valeur numérique intermédiaire correspondant à ce pixel et à cette couleur, et de la deuxième valeur numérique correspondant à ce pixel,
- le filtre d'interpolation basse-fréquence de dimension 5x5, étant représenté par la matrice suivante :

$$
\begin{bmatrix}
1/36 & 3/36 & 4/36 & 3/36 & 1/36 \\
3/36 & 9/36 & 12/36 & 9/36 & 3/36 \\
4/36 & 12/36 & 16/36 & 12/36 & 4/36 \\
3/36 & 9/36 & 12/36 & 9/36 & 3/36 \\
1/36 & 3/36 & 4/36 & 3/36 & 1/36
\end{bmatrix}
$$

- et le filtre d'interpolation haute-fréquence de dimension 5x5 étant représenté par la matrice suivante :

$$
\begin{bmatrix}
-1/36 & -3/36 & -4/36 & -3/36 & -1/36 \\
-3/36 & 0 & 6/36 & 0 & -3/36 \\
-4/36 & 6/36 & 20/36 & 6/36 & -4/36 \\
-3/36 & 0 & 6/36 & 0 & -3/36 \\
-1/36 & -3/36 & -4/36 & -3/36 & -1/36
\end{bmatrix}
$$

**Patentansprüche**

1. Verfahren zur Bearbeitung des durch einen Farbbildsensor bereitgestellten Bildes, beinhaltend ein Mosaik aus N farbigen Pixeln, welche gemäß einer regelmäßigen geographischen Verteilung dreier Farben angeordnet sind, bei welcher jeder Pixel einem Punkt des zu ermittelnden Bildes zugeordnet ist, wobei jeder Pixel ein digitales Signal bereitstellt, dessen Wert die Leuchtdichtekomponente eines Bildpunktes in der diesem Pixel entsprechenden Farbe darstellt, wobei die den N Pixeln entstammenden Signale in einer Matrix angeordnet sind und die Bildbearbeitung eine Interpolationsberechnung von Signalen der Matrix beinhaltet, welche es ermöglicht, jedem Bildpunkt drei digitale Leuchtdichtekomponenten-Werte zu geben, welche jeweils den drei Farben entsprechen, wohingegen der diesem Bildpunkt entsprechende Pixel ein Signal bereitstellt, welches einer einzigen Farbe entspricht, wobei das Verfahren **dadurch gekennzeichnet ist, dass** es folgende Schritte beinhaltet:

   - Definieren eines ersten elementarem Matrixfilters, welcher ein bilinearer Interpolationsfilter mit Abmessungen mxm ist, wobei m eine ungerade Zahl größer oder gleich 3 ist,
   - Definieren eines Tiefpass-Matrixfilters mit Abmessungen nxn, wobei n eine ungerade Zahl größer oder gleich 3 ist,
   - Definieren Hochpass-Matrixfilters, komplementär zum Tiefpassfilter, mit Abmessungen nxn,
   - Falten des ersten Matrixfilters mit dem Tiefpassfilter, zur Schaffung eines tieffrequenten Interpolationsfilters mit Abmessungen (m+n-1)x(m+n-1),
   - Falten des ersten Matrixfilters mit dem Hochpassfilter, zur Schaffung eines hochfrequenten Interpolationsfilters mit Abmessungen (m+n-1)x(m+n-1),
   - Filtern der Digitalsignalmatrix einzig anhand der Pixel der ersten Farbe durch den tieffrequenten Interpolationsfilter, Filtern der Digitalsignalmatrix einzig anhand der Pixel der zweiten Farbe mit dem tieffrequenten Interpolationsfilter, und Filtern der Digitalsignalmatrix einzig anhand der Pixel der dritten Farbe mit dem tieffrequenten Interpolationsfilter, wobei diese drei Filterungen dazu führen, jedem Punkt des Bildes einen ersten digitalen Zwischenwert für jede der Farben zu geben,
   - Filtern der kompletten Digitalsignalmatrix mit dem hochfrequenten Interpolationsfilter, ohne Berücksichtigung der Farben, zum Ermitteln eines zweiten digitalen Zwischenwertes für jeden Punkt des Bildes,
   - Addieren, für jeden Pixel, zum Erzielen eines digitalen Wertes einer gegebenen Farbe dieses Pixels, des ersten digitalen Zwischenwertes, welcher diesem Pixel und dieser Farbe entspricht, und des zweiten digitalen Wertes, welcher diesem Pixel entspricht.

2. Verfahren nach Anspruch 1, **dadurch gekennzeichnet, dass** der erste elementare Matrixfilter eine Abmessung von 3x3 aufweist und durch folgende Matrix dargestellt wird:

$$\begin{bmatrix} 1/4 & 1/2 & 1/4 \\ 1/2 & 1 & 1/2 \\ 1/4 & 1/2 & 1/4 \end{bmatrix}$$

**3.** Verfahren nach einem der Ansprüche 1 und 2, **dadurch gekennzeichnet, dass** der Tiefpassmatrixfilter ein einfacher Mittelwertfilter mit Abmessungen 3x3 ist und durch folgende Matrix dargestellt wird:

$$\begin{bmatrix} 1/9 & 1/9 & 1/9 \\ 1/9 & 1/9 & 1/9 \\ 1/9 & 1/9 & 1/9 \end{bmatrix}$$

und der Hochpassfilter durch folgende Matrix dargestellt wird:

$$\begin{bmatrix} -1/9 & -1/9 & -1/9 \\ -1/9 & 8/9 & -1/9 \\ -1/9 & -1/9 & -1/9 \end{bmatrix}$$

**4.** Verfahren nach einem der Ansprüche 1 bis 3, **dadurch gekennzeichnet, dass**, wenn die Pixel einer bestimmten Farbe einen geographischen Verteilungsabstand aufweisen, welcher zweimal kleiner als der Abstand der Pixel der anderen Farben ist, die Filterung der Digitalsignalmatrix, anhand der Pixel dieser bestimmten Farbe, durch den tieffrequenten Interpolationssffilter von einer Teilung durch zwei gefolgt ist, um den ersten Zwischenwert für diese Farbe bereitzustellen.

**5.** Verfahren zur Bearbeitung des durch einen Farbbildsensor bereitgestellten Bildes, beinhaltend ein Mosaik aus N farbigen Pixeln, welche gemäß einer regelmäßigen geographischen Verteilung dreier Farben angeordnet sind, bei welcher jeder Pixel einem Punkt des zu ermittelnden Bildes zugeordnet ist, wobei jeder Pixel ein digitales Signal bereitstellt, dessen Wert die Leuchtdichtekomponente eines Bildpunktes in der diesem Pixel entsprechenden Farbe darstellt, wobei die den N Pixeln entstammenden Digitalsignale in einer Matrix angeordnet sind und die Bildbearbeitung eine Interpolationsberechnung von Signalen der Matrix beinhaltet, welche es ermöglicht, jedem Bildpunkt drei digitale Leuchtdichtekomponenten-Werte zu geben, welche jeweils den drei Farben entsprechen, wohingegen der diesem Bildpunkt entsprechende Pixel ein Signal bereitstellt, welches einer einzigen Farbe entspricht, wobei das Verfahren **dadurch gekennzeichnet ist, dass** es folgende Schritte beinhaltet:

- Definieren eines tieffrequenten Interpolationsfilters mit Abmessungen 5x5, dargestellt durch folgende Matrix:

$$\begin{bmatrix} 1/36 & 3/36 & 4/36 & 3/36 & 1/36 \\ 3/36 & 9/36 & 12/36 & 9/36 & 3/36 \\ 4/36 & 12/36 & 16/36 & 12/36 & 4/36 \\ 3/36 & 9/36 & 12/36 & 9/36 & 3/36 \\ 1/36 & 3/36 & 4/36 & 3/36 & 1/36 \end{bmatrix}$$

- Definieren eines hochfrequenten Interpolationsfilters mit Abmessungen 5x5, dargestellt durch folgende Matrix:

$$[ \quad -1/36 \quad -3/36 \quad -4/36 \quad -3/36 \quad -1/36 \quad ]$$
$$[ \quad -3/36 \quad 0 \quad 6/36 \quad 0 \quad -3/36 \quad ]$$
$$[ \quad -4/36 \quad 6/36 \quad 20/36 \quad 6/36 \quad -4/36 \quad ]$$
$$[ \quad -3/36 \quad 0 \quad 6/36 \quad 0 \quad -3/36 \quad ]$$
$$[ \quad -1/36 \quad -3/36 \quad -4/36 \quad -3/36 \quad -1/36 \quad ]$$

- Filtern der Signalmatrix einzig anhand der Pixel der ersten Farbe durch den tieffrequenten Interpolationsfilter, Filtern der Signalmatrix einzig anhand der Pixel der zweiten Farbe mit dem tieffrequenten Interpolationsfilter, und Filtern der Signalmatrix einzig anhand der Pixel der dritten Farbe mit dem tieffrequenten Interpolationsfilter, wobei diese drei Filterungen dazu führen, jedem Punkt des Bildes einen ersten digitalen Zwischenwert für jede der Farben zu geben,

- Filtern der kompletten Signalmatrix mit dem hochfrequenten Interpolationsfilter, ohne Berücksichtigung der Farben, zum Ermitteln eines zweiten digitalen Zwischenwertes für jeden Punkt des Bildes,

- für jeden Pixel, Addieren, zum Erzielen eines digitalen Wertes einer gegebenen Farbe dieses Pixels, des ersten digitalen Zwischenwertes, welcher diesem Pixel und dieser Farbe entspricht, und des zweiten digitalen Wertes, welcher diesem Pixel entspricht.

6. Farbbildsensor, beinhaltend ein Mosaik aus N farbigen Pixeln, welche gemäß einer regelmäßigen geographischen Verteilung dreier Farben angeordnet sind, bei welcher jeder Pixel einem Punkt des zu ermittelnden Bildes zugeordnet ist, wobei jeder Pixel ein digitales Signal bereitstellt, dessen Wert die Leuchtdichtekomponente eines Bildpunktes in der diesem Pixel entsprechenden Farbe darstellt, wobei die den N Pixeln entstammenden Digitalsignale in einer Matrix angeordnet sind und die Bildbearbeitung eine Interpolationsberechnung von Signalen der Matrix beinhaltet, welche es ermöglicht, jedem Bildpunkt drei digitale Leuchtdichtekomponenten-Werte zu geben, welche jeweils den drei Farben entsprechen, wohingegen der diesem Bildpunkt entsprechende Pixel ein Signal bereitstellt, welches einer einzigen Farbe entspricht, wobei der Sensor **dadurch gekennzeichnet ist, dass** er Folgendes beinhaltet:

- Mittel zum Filtern der Signalmatrix einzig anhand der Pixel der ersten Farbe durch einen tieffrequenten Interpolationsfilter, Filtern der Signalmatrix einzig anhand der Pixel der zweiten Farbe mit dem tieffrequenten Interpolationsfilter, und Filtern der Signalmatrix einzig anhand der Pixel der dritten Farbe mit dem tieffrequenten Interpolationsfilter, wobei diese drei Filterungen dazu führen, jedem Punkt des Bildes einen ersten digitalen Zwischenwert für jede der Farben zu geben,

- Mittel zum Filtern der kompletten Signalmatrix mit einem hochfrequenten Interpolationsfilter, ohne Berücksichtigung der Farben, zum Ermitteln eines zweiten digitalen Zwischenwertes für jeden Punkt des Bildes,

- Mittel zum Addieren, zum Erzielen, für jeden Pixel, eines digitalen Wertes einer gegebenen Farbe dieses Pixels, welcher die Summe des ersten digitalen Zwischenwertes, welcher diesem Pixel und dieser Farbe entspricht, und des zweiten digitalen Wertes, welcher diesem Pixel entspricht, ist,

- wobei der tieffrequente Interpolationsfilter mit Abmessungen 5x5 durch folgende Matrix dargestellt ist:

$$[ \quad 1/36 \quad 3/36 \quad 4/36 \quad 3/36 \quad 1/36 \quad ]$$
$$[ \quad 3/36 \quad 9/36 \quad 12/36 \quad 9/36 \quad 3/36 \quad ]$$
$$[ \quad 4/36 \quad 12/36 \quad 16/36 \quad 12/36 \quad 4/36 \quad ]$$
$$[ \quad 3/36 \quad 9/36 \quad 12/36 \quad 9/36 \quad 3/36 \quad ]$$
$$[ \quad 1/36 \quad 3/36 \quad 4/36 \quad 3/36 \quad 1/36 \quad ]$$

- und der hochfrequente Interpolationsfilter mit Abmessungen 5x5 durch folgende Matrix dargestellt ist:

$$\begin{bmatrix} -1/36 & -3/36 & -4/36 & -3/36 & -1/36 \\ -3/36 & 0 & 6/36 & 0 & -3/36 \\ -4/36 & 6/36 & 20/36 & 6/36 & -4/36 \\ -3/36 & 0 & 6/36 & 0 & -3/36 \\ -1/36 & -3/36 & -4/36 & -3/36 & -1/36 \end{bmatrix}$$

## Claims

1. Method for processing the image delivered by a colour image sensor comprising a mosaic of N coloured pixels arranged in a regular geographic distribution of three colours in which each pixel is associated with one point of the image to be established, each pixel delivering a digital signal whose value represents the luminance component of an image point in the colour corresponding to that pixel, the signals arising from the N pixels being arranged in a matrix and the image processing operation comprising a calculation of interpolating signals of the matrix, allowing each image point to be given three digital values of luminance components corresponding respectively to the three colours, while the pixel corresponding to that image point delivers a signal corresponding to a single colour, method **characterized in that** it comprises the following steps:

   - defining a first elementary matrix filter, which is a bilinear interpolation filter, of size mxm, m being an odd number greater than or equal to 3;
   - defining a low-pass matrix filter of size nxn, n being an odd number greater than or equal to 3;
   - defining a high-pass matrix filter, complementary to the low-pass filter, of size nxn;
   - convoluting the first matrix filter with the low-pass filter, resulting in a low-frequency interpolation filter of size (m+n-1)x(m+n-1);
   - convoluting the first matrix filter with the high-pass filter, resulting in a high-frequency interpolation filter of size (m+n-1)x(m+n-1);
   - filtering the matrix of digital signals, using the pixels of the first colour only, with the low-frequency interpolation filter, filtering the matrix of digital signals, using the pixels of the second colour only, with the low-frequency interpolation filter, and filtering the matrix of digital signals, using the pixels of the third colour only, with the low-frequency interpolation filter, these three filtering operations resulting in a first intermediate digital value being given to each point of the image for each of the colours;
   - filtering the entire matrix of digital signals with the high-frequency interpolation filter, without taking the colours into account, in order to establish a second intermediate digital value for each point of the image;
   - adding, for each pixel, in order to obtain a digital value of a given colour of that pixel, the first intermediate digital value corresponding to that pixel and to that colour, and the second digital value corresponding to that pixel.

2. Method according to Claim 1, **characterized in that** the size of the first elementary matrix filter is of size 3x3 and is represented by the following matrix:

$$\begin{bmatrix} 1/4 & 1/2 & 1/4 \\ 1/2 & 1 & 1/2 \\ 1/4 & 1/2 & 1/4 \end{bmatrix}$$

3. Method according to one of Claims 1 and 2, **characterized in that** the low-pass matrix filter is a simple mean filter of size 3x3 and is represented by the following matrix:

$$\begin{bmatrix} 1/9 & 1/9 & 1/9 \\ 1/9 & 1/9 & 1/9 \\ 1/9 & 1/9 & 1/9 \end{bmatrix}$$

and the high-pass filter is represented by the following matrix:

$$\begin{bmatrix} -1/9 & -1/9 & -1/9 \\ -1/9 & 8/9 & -1/9 \\ -1/9 & -1/9 & -1/9 \end{bmatrix}$$

4. Method according to one of Claims 1 to 3, **characterized in that**, in the case in which the pixels of one determined colour have a pitch of geographic distribution that is twice smaller than the pitch of the pixels of the other colours, the filtering of the matrix of digital signals using the pixels of this determined colour with the low-frequency interpolation filter is followed by a division by two in order to deliver the first intermediate value for that colour.

5. Method for processing the image delivered by a colour image sensor comprising a mosaic of N coloured pixels arranged in a regular geographic distribution of three colours in which each pixel is associated with one point of the image to be established, each pixel delivering a digital signal whose value represents the luminance component of an image point in the colour corresponding to that pixel, the digital signals arising from the N pixels being arranged in a matrix and the image processing operation comprising an interpolation calculation of the matrix signals, allowing each image point to be given three digital values of luminance components corresponding respectively to the three colours, while the pixel corresponding to this image point delivers a signal corresponding to a single colour, the method being **characterized in that** it comprises the following steps:

- defining a low-frequency interpolation filter of size 5x5, represented by the following matrix:

$$\begin{bmatrix} 1/36 & 3/36 & 4/36 & 3/36 & 1/36 \\ 3/36 & 9/36 & 12/36 & 9/36 & 3/36 \\ 4/36 & 12/36 & 16/36 & 12/36 & 4/36 \\ 3/36 & 9/36 & 12/36 & 9/36 & 3/36 \\ 1/36 & 3/36 & 4/36 & 3/36 & 1/36 \end{bmatrix}$$

- defining a high-frequency interpolation filter of size 5x5 represented by the following matrix:

$$\begin{bmatrix} -1/36 & -3/36 & -4/36 & -3/36 & -1/36 \\ -3/36 & 0 & 6/36 & 0 & -3/36 \\ -4/36 & 6/36 & 20/36 & 6/36 & -4/36 \\ -3/36 & 0 & 6/36 & 0 & -3/36 \\ -1/36 & -3/36 & -4/36 & -3/36 & -1/36 \end{bmatrix}$$

- filtering the matrix of signals, using the pixels of the first colour only, with the low-frequency interpolation filter, filtering the matrix of signals, using the pixels of the second colour only, with the low-frequency interpolation filter, and filtering the matrix of signals, using the pixels of the third colour only, with the low-frequency interpolation filter, these three filtering operations resulting in a first intermediate digital value being given to each point of the image for each of the colours;
- filtering the entire matrix of signals with the high-frequency interpolation filter, regardless of the colours, in order to establish a second intermediate digital value for each point of the image;
- for each pixel, adding, in order to obtain a digital value of a given colour of that pixel, the first intermediate digital value corresponding to that pixel and to that colour, and the second digital value corresponding to that pixel.

6. Colour image sensor comprising a mosaic of N coloured pixels arranged in a regular geographic distribution of three colours in which each pixel is associated with one point of the image to be established, each pixel delivering a digital signal whose value represents the luminance component of an image point in the colour corresponding to that pixel, the digital signals arising from the N pixels being arranged in a matrix and the image processing operation comprising an interpolation calculation of matrix signals, allowing each image point to be given three digital values of luminance components corresponding respectively to the three colours, while the pixel corresponding to that image point delivers a signal corresponding to a single colour, the sensor being **characterized in that** it comprises:

- means for filtering the matrix of signals, using the pixels of the first colour only, with a low-frequency interpolation filter, filtering the matrix of signals, using the pixels of the second colour only, with the low-frequency interpolation filter, and filtering the matrix of signals, using the pixels of the third colour only, with the low-frequency interpolation filter, these three filtering operations resulting in a first intermediate digital value being given to each point of the image for each of the colours;
- means for filtering the entire matrix of signals with a high-frequency interpolation filter, regardless of the colors, in order to establish a second intermediate digital value for each point of the image;
- means for adding in order to obtain, for each pixel, a digital value of a given colour of that pixel which is the sum of the first intermediate digital value corresponding to that pixel and to that colour, and the second digital value corresponding to that pixel;
- the low-frequency interpolation filter of size 5x5 being represented by the following matrix:

$$
\begin{bmatrix}
1/36 & 3/36 & 4/36 & 3/36 & 1/36 \\
3/36 & 9/36 & 12/36 & 9/36 & 3/36 \\
4/36 & 12/36 & 16/36 & 12/36 & 4/36 \\
3/36 & 9/36 & 12/36 & 9/36 & 3/36 \\
1/36 & 3/36 & 4/36 & 3/36 & 1/36
\end{bmatrix}
$$

- and the high-frequency interpolation filter of size 5x5 being represented by the following matrix:

$$
\begin{bmatrix}
-1/36 & -3/36 & -4/36 & -3/36 & -1/36 \\
-3/36 & 0 & 6/36 & 0 & -3/36 \\
-4/36 & 6/36 & 20/36 & 6/36 & -4/36 \\
-3/36 & 0 & 6/36 & 0 & -3/36 \\
-1/36 & -3/36 & -4/36 & -3/36 & -1/36
\end{bmatrix}
$$

FIG. 1

Filtrage BF_R

Filtrage BF_G

Filtrage BF_B

**FIG. 2**

Filtrage HF

$VR = R1+W$

$VG = (G1)/2 + W$

$VB = B1 +W$

**FIG. 3**

**RÉFÉRENCES CITÉES DANS LA DESCRIPTION**

**Documents brevets cités dans la description**

- US 20030025814 A